# FASCICULE DE BREVET EUROPEEN

(11) **EP 3 551 350 B1**
(45) Date de publication et mention de la délivrance du brevet: **07.06.2023**
(21) Numéro de dépôt: 17835717.4
(22) Date de dépôt: 07.12.2017
(51) Int. Cl.: B07B 13/16

(54) **INSTALLATION CHIMIQUE DE PRODUCTION D'ACIDE PHOSPHORIQUE MUNIE D'UN SYSTEME D'EVACUATION DE PHOSPHOGYPSE**
CHEMISCHE HERSTELLUNG VON PHOSPHORSÄURE MIT EINEM PHOSPHORGIPS-ENTLADUNGSSYSTEM
CHEMICAL PHOSPHORIC ACID PRODUCTION UNIT COMPRISING A PHOSPHOGYPSUM DISCHARGE SYSTEM

(30) Priorité: 07.12.2016 FR 1662091
(43) Date de publication de la demande: 16.10.2019
(73) Titulaire: OCP SA, Casablanca 20200 (MA)
(72) Inventeur: EL HACHMI, Abdelaziz, El Jadida (MA)
(74) Mandataire: Regimbeau
(86) Numéro de dépôt international: PCT/MA2017/000027
(87) Numéro de publication internationale: WO 2018/106096

(56) Documents cités:
- DE-U1-202012 101 573
- FR-A- 330 654
- RU-C1- 2 008 254
- US-A- 1 015 299

## Description

### DOMAINE DE L'INVENTION

La présente invention concerne un une installation chimique de production d'acide phosphorique, laquelle est munie d'un système d'évacuation du phosphogypse obtenu principalement lors de la synthèse de l'acide phosphorique. En fin de synthèse, le précipité de phosphogypse est séparé de l'acide phosphorique par filtration, puis évacué de l'installation chimique par le système d'évacuation.

### ETAT DE LA TECHNIQUE

Une installation de production d'acide phosphorique comprend un réacteur dans lequel est effectuée la synthèse de l'acide phosphorique. Le produit réactionnel issu de cette synthèse contient de l'acide phosphorique que l'on récupère, mais également un précipité de phosphogypse qui est extrait du produit réactionnel par filtration et récupéré dans un dispositif de réception adéquat, généralement une trémie.

La filtration du phosphogypse est un procédé connu et couramment utilisé dans l'industrie chimique. De manière générale, on utilise un filtre horizontal rotatif à toiles pivotantes. De tels filtres sont décrits notamment dans les documents US 2004/0089599 et US 938378. Ces filtres comprennent des cellules de filtration agencées de manière à former un cylindre, et sont mobiles en rotation autour de l'axe du cylindre. Une fois la filtration terminée, le cylindre est basculé et le filtrat, ici le précipité de phosphogypse, est déplacé vers un dispositif de réception situé à l'aplomb du filtre, tel qu'une trémie par exemple. Le document RU 2 008 254 C1 décrit une installation chimique de production d'acide phosphorique selon le préambule de la revendication 1.

Une fois le phosphogypse récupéré dans la trémie, il est généralement évacué hors de ladite trémie grâce à un fluide porteur, qui est le plus souvent de l'eau. Cette méthode présente cependant l'inconvénient d'humidifier considérablement le phosphogypse, le rendant très lourd, et donc plus difficile à déplacer. De plus, la majorité des procédés de valorisation du phosphogypse nécessitent qu'il soit sec. Or la méthode d'évacuation par jet d'eau augmente significativement le temps de séchage ultérieur, ce qui entraine une perte de temps et des pertes financières conséquentes.

Afin de résoudre ce problème, il est possible d'utiliser, à la place du jet d'eau, une vis sans fin motorisée, positionnée en sortie de trémie. Le phosphogypse vient se loger dans les cannelures de la vis sans fin puis est évacué par rotation de cette dernière. L'évacuation du phosphogypse est ainsi réalisée « par voie sèche », c'est-à-dire sans l'utilisation d'un fluide porteur, et en particulier sans eau. Ce système de vis sans fin présente également l'avantage de pouvoir contrôler le débit d'évacuation du phosphogypse, par le biais du réglage de la vitesse de rotation de la vis sans fin et de ses caractéristiques intrinsèques telles que les dimensions de ses cannelures.

Cependant, les cannelures de la vis sans fin sont régulièrement encrassées et obturées, diminuant nettement le débit d'évacuation. Cela provoque des arrêts fréquents de l'installation, et ainsi une perte notable de temps et des coûts supplémentaires de production.

Par ailleurs, la méthode d'évacuation du phosphogypse par la vis sans fin ne permet pas de contrôler la fraction, ou quantité relative, de phosphogypse évacué par rapport à la quantité initiale de phosphogypse filtré arrivant en entrée de la trémie, puisque la totalité du phosphogypse en sortie de la trémie est évacuée par la vis sans fin.

### EXPOSE DE L'INVENTION

La présente invention a donc pour but de remédier aux inconvénients de l'art antérieur en proposant une installation chimique de production d'acide phosphorique comprenant un système d'évacuation du phosphogypse permettant de contrôler la fraction, désignée également comme quantité relative, de phosphogypse évacué, par rapport à la quantité initiale de phosphogypse obtenu après filtration en entrée du dispositif de réception.

Le système d'évacuation de phosphogypse de l'installation chimique vise également à évacuer le phosphogypse « par voie sèche », c'est-à-dire sans l'utilisation d'un fluide porteur, tel que de l'eau par exemple qui est le fluide porteur le plus couramment utilisé. Le phosphogypse évacué est alors aisément exploitable, et ses propriétés physiques et chimiques ne sont pas altérées.

A cet effet, l'invention a pour objet une installation chimique de production d'acide phosphorique, comprenant :
- un réacteur pour la production d'acide phosphorique,
- un dispositif de réception du phosphogypse obtenu après filtration de l'acide phosphorique produit dans le réacteur,
- un système d'évacuation de phosphogypse du dispositif de réception,
dans laquelle le système d'évacuation comprend une goulotte dont l'entrée est située à l'intérieur du dispositif de réception et est agencée de manière à communiquer avec ledit dispositif de réception, et un volet mobile autour d'un axe de rotation, ledit volet étant apte à s'ouvrir selon un angle prédéterminé correspondant à une section prédéterminée de passage d'une fraction de phosphogypse par l'entrée de la goulotte, et à se fermer afin d'empêcher le passage du phosphogypse dans la goulotte.

Le phosphogypse est évacué par voie sèche de l'installation chimique. La fraction de phosphogypse évacuée est contrôlée notamment par réglage de l'ouverture du volet, et toute perte éventuelle de phosphogypse durant son évacuation est minimisée grâce au positionnement de l'entrée de la goulotte dans le dispositif de réception.

Selon d'autres caractéristiques optionnelles de l'installation chimique de production d'acide phosphorique prises seules ou selon leurs combinaisons techniquement possibles :
- l'angle d'ouverture du volet est compris entre 0° lorsque ledit volet est fermé et 90°, de préférence 75°, lorsque ledit volet est ouvert ;
- le volet est actionné par au moins un vérin pneumatique ou électrique ;
- le système d'évacuation comprend en outre une conduite communiquant avec la sortie de la goulotte, permettant l'évacuation du phosphogypse de la goulotte ;
- le volet s'ouvre vers l'intérieur du dispositif de réception de phosphogypse. Ceci est particulièrement avantageux lorsque la section de la goulotte est supérieure à celle de la conduite, et que le volet est conçu pour fonctionner dans la goulotte et possède dès lors une taille qui lui permet de se déplacer dans la goulotte mais pas dans la conduite ;
- l'axe de rotation du volet est agencé dans la goulotte à la sortie de la goulotte communiquant avec la conduite ;
- l'installation chimique comprend en outre un deuxième système d'évacuation de phosphogypse, ce dernier permettant l'évacuation d'une deuxième fraction de la quantité de phosphogypse initialement présente à l'entrée du dispositif de réception, de sorte que la somme des deux fractions correspond à ladite quantité de phosphogypse initialement présente à l'entrée du dispositif de réception ;

L'invention concerne également un procédé d'évacuation de phosphogypse d'un dispositif de réception de phosphogypse, dans une installation chimique telle que définie précédemment, comprenant une étape d'ouverture du volet d'accès à la goulotte selon un angle prédéterminé, et une étape de circulation d'une fraction de phosphogypse depuis le dispositif de réception dans la goulotte.

Selon une autre caractéristique optionnelle, le procédé comprend en outre une étape de transfert de la fraction de phosphogypse depuis la goulotte vers une conduite, permettant l'évacuation du phosphogypse de la goulotte.

### BRÈVE DESCRIPTION DES FIGURES

D'autres avantages et caractéristiques de l'invention apparaîtront à la lecture de la description suivante donnée à titre d'exemple illustratif et non limitatif, en référence aux Figures annexées qui représentent :
- La Figure 1, une vue générale de côté du système d'évacuation de phosphogypse au sein d'une installation chimique de production d'acide phosphorique, selon l'invention ;
- La Figure 2, une vue en coupe selon l'axe A-A du système d'évacuation de la Figure 1
- La Figure 3A, un schéma de principe du système d'évacuation du phosphogypse selon l'invention, dans lequel le volet est fermé ;
- La Figure 3B, un schéma de principe similaire à celui de la Figure 3A, dans lequel le volet est ouvert à moitié ;
- La Figure 3C, un schéma de principe similaire à celui des Figures 3A et 3B, dans lequel le volet est ouvert à son maximum.

### DESCRIPTION DETAILLEE DE L'INVENTION

La description suivante porte principalement sur un système d'évacuation de phosphogypse d'un dispositif de réception, au sein d'une installation de production d'acide phosphorique, ainsi que sur un procédé d'évacuation du phosphogypse hors d'un tel dispositif de réception.

Le système et le procédé d'évacuation de phosphogypse sont décrits en parallèle dans la suite du présent texte afin d'en simplifier la présentation.

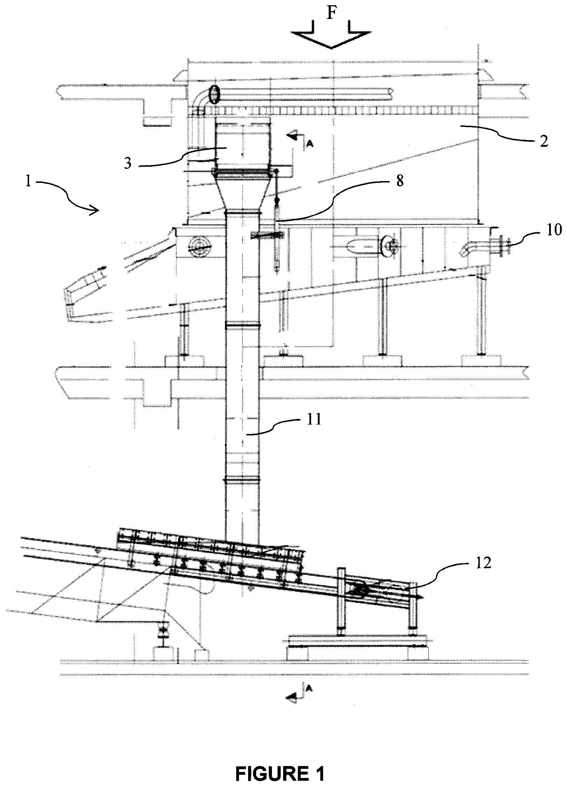

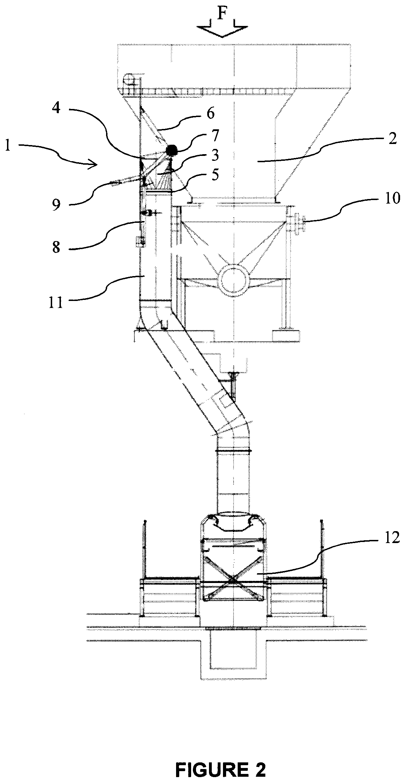

Le système d'évacuation de phosphogypse est tout particulièrement, mais non exclusivement, prévu pour être associé à un autre système d'évacuation, désigné dans la suite du présent texte en tant que système tiers, dont seules les buses de fluide sont représentées sur les Figures 1 et 2.

A l'entrée de l'installation chimique, le phosphogypse F entrant est filtré par un dispositif de filtration adéquat, permettant de séparer le phosphogypse de l'acide phosphorique, lors de la synthèse de l'acide phosphorique.

Le système d'évacuation de phosphogypse est situé en aval du dispositif de filtration. Il est tout particulièrement, mais non exclusivement, adapté pour évacuer le phosphogypse préalablement filtré par un filtre horizontal rotatif à toiles pivotantes.

Lorsque le phosphogypse a été filtré, il est déversé dans un dispositif de réception, ce dernier étant généralement une trémie telle que représentée avec la référence 2 sur les Figures 1 et 2. Il s'agit de la quantité de phosphogypse initialement présente à l'entrée du dispositif de réception, ou plus simplement de la quantité initiale de phosphogypse, notée Mi.

Une fraction de la quantité initiale de phosphogypse, ou quantité relative, est ensuite évacuée par le système d'évacuation (évacuation partielle), tandis que la fraction restante est de préférence évacuée par un système tiers, généralement bien connu de l'homme du métier.

On définit une fraction de phosphogypse comme étant le rapport entre une quantité définie de phosphogypse et la quantité initiale Mi de phosphogypse.

Le système d'évacuation permet dès lors de contrôler d'une part la quantité M_{S} (en volume ou en masse par exemple) de phosphogypse évacué par voie sèche par ledit système, et la fraction F_{S} associée correspondant à la quantité M_{S} de phosphogypse évacué divisée par la quantité initiale Mi de phosphogypse (F_{S} = M_{S} / Mi).

Il permet d'autre part de manière indirecte de contrôler la quantité M_{H} (en volume ou en masse par exemple) de phosphogypse évacué par voie humide par le système tiers, et la fraction F_{H} associée correspondant à la quantité M_{H} de phosphogypse évacuée divisée par la quantité initiale Mi de phosphogypse (F_{H} = M_{H} / Mi) dont l'évacuation est le plus souvent effectuée via un fluide porteur.

En référence aux Figures 1 et 2, le système d'évacuation 1 de phosphogypse comprend une goulotte 3 dont l'entrée 4 communique avec la trémie 2, afin de permettre le passage d'une fraction F_{S} de phosphogypse de la trémie 2 à la goulotte 3 lorsque nécessaire.

De manière avantageuse, la goulotte 3 est en partie située à l'intérieur de la trémie, de manière à éviter toute perte de phosphogypse hors du circuit d'évacuation. En particulier, l'entrée 4 de la goulotte est avantageusement située à l'intérieur de la trémie 2 dans ce même but.

Les dimensions de la goulotte 3 ainsi que son positionnement relativement à, et le cas échéant à l'intérieur de, la trémie 2 sont adaptés à la fois afin de maximiser la capacité d'évacuation du phosphogypse par le système d'évacuation 1 hors de la trémie, et afin de minimiser l'encombrement de la partie de goulotte située dans la trémie.

En particulier, lorsque le phosphogypse a été filtré par un filtre horizontal rotatif à toiles pivotantes, l'entrée 4 de la goulotte 3 permet de collecter une partie du phosphogypse déchargé par les toiles du filtre, et les dimensions de la goulotte 3 ainsi que son positionnement relativement à, et le cas échéant à l'intérieur de, la trémie 2 sont adaptés afin de maximiser le flux de phosphogypse tombant d'une toile pivotante et passant orthogonalement à travers la section de passage 13 de la goulotte 3.

Le système d'évacuation 1 de phosphogypse comprend en outre un volet 6 mobile en rotation autour d'un axe 7, ce dernier étant sensiblement horizontal, c'est-à-dire sensiblement parallèle au sol sur lequel repose l'installation chimique comprenant le système d'évacuation.

Le volet 6 est avantageusement positionné à proximité de l'entrée 4 de la goulotte 3. Selon le mode de réalisation de la Figure 2, l'axe 7 du volet 6 est agencé à l'entrée 4 de la goulotte, et permet le passage du phosphogypse de la trémie 2 dans la goulotte 3.

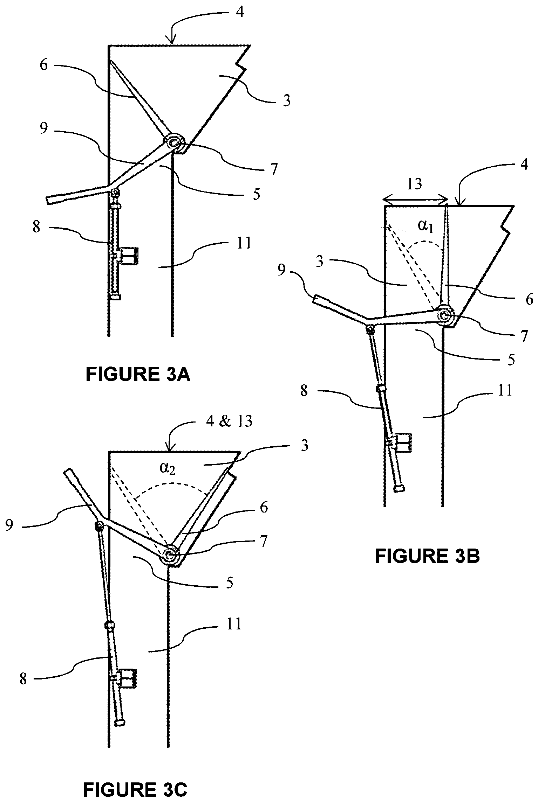

Selon un autre mode de réalisation illustré sur les Figures 3A, 3B, et 3C, l'axe 7 du volet 6 est agencé dans la goulotte à la sortie 5 de la goulotte, et permet conjointement le passage du phosphogypse de la trémie 2 dans la goulotte 3 et le passage du phosphogypse de la goulotte à la conduite 11 située dans le prolongement de la goulotte.

Le volet 6 autorise ou interdit le passage du phosphogypse dans la goulotte 3 respectivement en s'ouvrant ou en se fermant par rotation autour de son axe 7. De plus, de manière préférée, le volet 6 s'ouvre vers l'intérieur de la trémie 2 et se situe, lorsqu'il est ouvert, à l'intérieur de la trémie.

De préférence, le volet 6 est de forme trapézoïdale.

En référence aux Figures 3A, 3B, et 3C, l'angle d'ouverture du volet 6, noté α, permet d'ajuster la section de passage 13 du phosphogypse dans la goulotte puis dans la conduite 11, et ainsi de contrôler la fraction de phosphogypse évacuée par le système d'évacuation 1.

Ainsi, plus l'angle d'ouverture α du volet 6 est grand, plus la section de passage 13 du phosphogypse par l'entrée 4 de la goulotte est grande, et plus la fraction de phosphogypse évacuée par le système d'évacuation 1 est importante. Au contraire, plus l'angle d'ouverture α du volet 6 est petit, plus la section de passage 13 du phosphogypse par l'entrée 4 de la goulotte est petite, et plus la fraction de phosphogypse évacuée par le système d'évacuation 1 est faible.

Par extension, d'autres grandeurs associées telles que par exemple le débit d'évacuation de phosphogypse (avec un fonctionnement en continu du dispositif de filtration et du système d'évacuation) par le système d'évacuation, sont également connues et contrôlées en variant l'angle d'ouverture du volet.

L'angle d'ouverture α du volet 6 est de préférence compris entre 0° lorsque ledit volet est fermé, et 90°, de manière davantage préférée 75°, lorsque le volet est ouvert.

De préférence, le volet 6 est actionné par un ou plusieurs vérins 8 pneumatique(s), dont le fonctionnement est représenté sur les Figures 3A, 3B et 3C.

Une extrémité du vérin est fixée à la conduite 11 qui communique avec la sortie 5 de la goulotte 3, ladite conduite permettant d'acheminer le phosphogypse sec vers un convoyeur à bande 12.

L'extrémité libre du vérin 8 est articulée à un bras 9, lui-même articulé, et de préférence solidaire, au volet 6. Lorsque le volet est fermé, sur la Figure 3A, le vérin 8 est comprimé et le bras 9 est abaissé. Le phosphogypse ne peut alors pas traverser la goulotte 3. L'extension du vérin 8 provoque la montée du bras 9, qui lui-même provoque l'ouverture du volet 6 par rotation autour de son axe 7. Le phosphogypse peut alors traverser la goulotte 3 et pénétrer dans la conduite 11.

Ainsi, le volet est partiellement ouvert selon un angle α₁, correspondant à une section de passage 13, sur la Figure 3B, et totalement ouvert selon un angle α₂, correspondant à une section de passage 13 plus grande, sur la Figure 3C.

De manière alternative, le volet 6 est actionné par un ou plusieurs moteur(s) électrique(s). Bien évidemment, le volet 6 peut être actionné par tout autre moyen adapté prévu à cet effet.

Le phosphogypse traverse la goulotte 3 et passe ensuite de la goulotte à la conduite 11, pour être acheminé jusqu'au convoyeur à bande 12. Des bavettes 13 flexibles sont avantageusement prévues afin d'assurer l'étanchéité entre la sortie de la conduite 11 et le convoyeur à bande 12. Ce dernier assure alors la manutention du phosphogypse vers une zone définie.

On précisera que la goulotte 3, le volet 6, et la conduite 11 sont conçues de manière à assurer une vitesse optimale d'acheminement du phosphogypse sans fluide porteur. De plus, les matériaux constitutifs de ces trois éléments sont résistants à la corrosion et à l'abrasion provoquées par le phosphogypse.

La fraction de phosphogypse restante F_{H}, non récupérée par le système d'évacuation 1 de phosphogypse, est collectée dans le fond de la trémie 2 puis évacuée de ladite trémie par le système tiers. Comme indiqué précédemment, il s'agit en général d'un jet d'eau généré par des buses 10 prévues à cet effet. Le débit du jet d'eau est contrôlé par des vannes en fonction du débit de phosphogypse afin de minimiser la consommation d'eau et d'énergie.

En sortie de l'installation chimique, on a donc récupéré une fraction sèche F_{S} de phosphogypse via le système d'évacuation 1 de phosphogypse, et une fraction humide F_{H} de phosphogypse via le système tiers. Ces deux fractions sont contrôlables et ajustables via l'angle d'ouverture α du volet 6, c'est-à-dire que l'on peut adapter les quantités relatives de phosphogypse évacuées par chaque système d'évacuation par rapport à la quantité initiale Mi de phosphogypse filtré.

On connaît alors le ratio de fraction sèche sur la fraction humide R = F_{S} / F_{H}.

La maîtrise du ratio R permet de mieux répondre aux besoins industriels survenant ultérieurement au procédé décrit.

Pour conclure, le système d'évacuation de phosphogypse décrit permet d'évacuer un débit de phosphogypse indépendamment de la cadence de production du dispositif de filtration, et sans altération des propriétés physiques et chimiques du phosphogypse, notamment le taux d'humidité et la teneur en acide phosphorique, et sans perturbation des paramètres de fonctionnement du dispositif de filtration.

### REFERENCES

- US 2004/0089599
- US 938378

## Revendications

1. Installation chimique de production d'acide phosphorique, comprenant :
- un réacteur pour la production d'acide phosphorique,
- un dispositif de réception (2) du phosphogypse obtenu après filtration de l'acide phosphorique produit dans le réacteur, l'installation chimique étant **caractérisée en ce qu'**elle comprend :
- un système d'évacuation (1) de phosphogypse du dispositif de réception (2), comprenant une goulotte (3) dont l'entrée (4) est située à l'intérieur du dispositif de réception (2) et agencée de manière à communiquer avec ledit dispositif de réception (2), et un volet (6) mobile autour d'un axe de rotation (7), ledit volet (6) étant apte à s'ouvrir selon un angle (α) prédéterminé correspondant à une section prédéterminée de passage (13) d'une fraction de phosphogypse par l'entrée (4) de la goulotte (3), et à se fermer afin d'empêcher le passage du phosphogypse dans la goulotte.

2. Installation chimique selon la revendication 1, dans laquelle l'angle (α) d'ouverture du volet (6) est compris entre 0° lorsque ledit volet est fermé et 90°, de préférence 75°, lorsque ledit volet est ouvert.

3. Installation chimique selon l'une quelconque des revendications précédentes, dans laquelle le volet (6) est actionné par au moins un vérin (8) pneumatique ou électrique.

4. Installation chimique selon l'une quelconque des revendications précédentes, dans laquelle le système d'évacuation (1) de phosphogypse comprend en outre une conduite (11) communiquant avec la sortie (5) de la goulotte (3), permettant l'évacuation du phosphogypse de la goulotte (3) vers ladite conduite (11).

5. Installation chimique selon la revendication 4, dans laquelle le volet (6) s'ouvre vers l'intérieur du dispositif de réception (2) du phosphogypse.

6. Installation chimique selon l'une des revendications 4 ou 5, dans laquelle l'axe de rotation (7) du volet (6) est agencé dans la goulotte (3) à la sortie (5) de la goulotte communiquant avec la conduite (11).

7. Installation chimique selon l'une quelconque des revendications précédentes, comprenant en outre un deuxième système d'évacuation de phosphogypse, ce dernier permettant l'évacuation d'une deuxième fraction de la quantité de phosphogypse initialement présente à l'entrée du dispositif de réception (2), de sorte que la somme des deux fractions correspond à ladite quantité de phosphogypse initialement présente à l'entrée du dispositif de réception (2).

8. Procédé d'évacuation de phosphogypse d'un dispositif de réception (2) de phosphogypse, dans une installation chimique selon l'une des revendications 1 à 7, comprenant une étape d'ouverture du volet (6) d'accès à la goulotte (3) selon un angle (α) prédéterminé, et une étape de circulation d'une fraction de phosphogypse depuis le dispositif de réception (2) dans la goulotte (3).

9. Procédé selon la revendication 8, comprenant en outre une étape de transfert de la fraction de phosphogypse depuis la goulotte (3) vers une conduite (11), permettant l'évacuation du phosphogypse de la goulotte (3).

## Patentansprüche

1. Chemische Anlage zur Herstellung von Phosphorsäure, umfassend :
- einen Reaktor zur Herstellung von Phosphorsäure,
- eine Aufnahmevorrichtung (2) für den Phosphogips, der nach der Filtration der im Reaktor erzeugten Phosphorsäure entsteht,
- ein Abführsystem (1) für Phosphogips aus der Aufnahmevorrichtung (2), wobei die chemische Anlage **dadurch gekennzeichnet ist, dass** das Abführsystem (1) eine Rutsche (3), deren Einlass (4) sich im Inneren der Aufnahmevorrichtung (2) befindet und so angeordnet ist, dass sie mit der Aufnahmevorrichtung (2) in Verbindung steht, und eine Klappe (6) umfasst, die um eine Drehachse (7) beweglich ist, wobei die Klappe (6) geeignet ist, sich in einem vorbestimmten Winkel (α) zu öffnen, der einem vorbestimmten Querschnitt für den Durchgang (13) einer Phosphogisfraktion durch den Einlass (4) der Rutsche (3) entspricht, und sich zu schließen, um den Durchgang von Phosphogips in die Rutsche zu verhindern.

2. Chemische Anlage nach Anspruch 1, wobei der Öffnungswinkel (α) der Klappe (6) zwischen 0°, wenn die Klappe geschlossen ist, und 90°, vorzugsweise 75°, wenn die Klappe geöffnet ist, liegt.

3. Chemische Anlage nach einem der vorhergehenden Ansprüche, bei der die Klappe (6) durch mindestens einen pneumatischen oder elektrischen Zylinder (8) betätigt wird.

4. Chemische Anlage nach einem der vorhergehenden Ansprüche, wobei das Phosphogips-Abführsystem (1) außerdem eine Leitung (11) umfasst, die mit dem Auslass (5) der Rutsche (3) in Verbindung steht und die Abfuhr von Phosphogips aus der Rutsche (3) in diese Leitung (11) ermöglicht.

5. Chemische Anlage nach Anspruch 4, bei der sich die Klappe (6) zum Inneren der Aufnahmevorrichtung (2) für Phosphogips hin öffnet.

6. Chemische Anlage nach einem der Ansprüche 4 oder 5, bei der die Drehachse (7) der Klappe (6) in der Rutsche (3) am Auslass (5) der Rutsche angeordnet ist, der mit der Leitung (11) in Verbindung steht.

7. Chemische Anlage nach einem der vorhergehenden Ansprüche, die außerdem ein zweites Phosphogips-Abführsystem umfasst, wobei das letztere die Abfuhr einer zweiten Fraktion der ursprünglich am Eingang der Aufnahmevorrichtung (2) vorhandenen Phosphogipsmenge ermöglicht, so dass die Summe der beiden Fraktionen der ursprünglich am Eingang der Aufnahmevorrichtung (2) vorhandenen Phosphogipsmenge entspricht.

8. Verfahren zum Abführen von Phosphogips aus einer Phosphogips-Aufnahmevorrichtung (2) in einer chemischen Anlage nach einem der Ansprüche 1 bis 7, umfassend einen Schritt des Öffnens der Klappe (6) zur Rutsche (3) in einem vorbestimmten Winkel (α) und einen Schritt des Umwälzens einer Phosphogipsfraktion aus der Aufnahmevorrichtung (2) in die Rutsche (3).

9. Verfahren nach Anspruch 8, das außerdem einen Schritt umfasst, bei dem die Phosphogipsfraktion aus der Rutsche (3) in eine Leitung (11) überführt wird, wodurch der Phosphogips aus der Rutsche (3) entfernt werden kann.

## Claims

1. Chemical plant for the production of phosphoric acid, comprising :
- a reactor for the production of phosphoric acid,
- a receiving device (2) for receiving the phosphogypsum obtained after filtration of the phosphoric acid produced in the reactor,
- a phosphogypsum evacuation system (1) from the receiving device (2),
the chemical installation being **characterized in that** the evacuation system (1) comprises a chute (3), the inlet (4) of which is located inside the receiving device (2) and is arranged so as to communicate with the said receiving device (2), and a flap (6) which is movable about a rotation axis (7) said flap (6) being able to open at a predetermined angle (α) corresponding to a predetermined section of passage (13) of a fraction of phosphogypsum through the inlet (4) of the chute (3), and to close in order to prevent the passage of phosphogypsum into the chute.

2. The chemical plant of claim 1, wherein the angle (α) of opening of the flap (6) is between 0° when said flap is closed and 90°, preferably 75°, when said flap is open.

3. The chemical plant according to any of the preceding claims, wherein the flap (6) is actuated by at least one pneumatic or electric cylinder (8).

4. The chemical plant according to any of the preceding claims, wherein the phosphogypsum evacuation system (1) further comprises a pipe (11) communicating with the outlet (5) of the chute (3), allowing the discharge of phosphogypsum from the chute (3) to said pipe (11).

5. The chemical plant of claim 4, wherein the flap (6) opens into the interior of the receiving device (2) for receiving the phosphogypsum.

6. The chemical plant according to one of claims 4 or 5, wherein the rotation axis (7) of the flap (6) is arranged in the chute (3) at the outlet (5) of the chute communicating with the pipe (11).

7. The chemical plant according to any one of the preceding claims, further comprising a second phosphogypsum evacuation system, the latter allowing the discharge of a second fraction of the amount of phosphogypsum initially present at the inlet of the receiving device (2), so that the sum of the two fractions corresponds to said amount of phosphogypsum initially present at the inlet of the receiving device (2).

8. A method of discharging phosphogypsum from a phosphogypsum receiving device (2) in a chemical plant according to one of claims 1 to 7, comprising a step of opening the access flap (6) to the chute (3) at a predetermined angle (α), and a step of circulating a phosphogypsum fraction from the receiving device (2) into the chute (3).

9. The method according to claim 8, further comprising a step of transferring the phosphogypsum fraction from the chute (3) to a pipe (11), allowing the phosphogypsum to be discharged from the chute (3).
